# EUROPEAN PATENT APPLICATION

(11) **EP 1 239 620 A2**
(43) Date of publication of application: **11.09.2002**
(21) Application number: 02003563.0
(22) Date of filing: 15.02.2002
(51) Int. Cl.: H04J 3/06, G06F 1/14, H04L 29/06

(54) **Relative time synchronization between three or more systems**

(30) Priority: 06.03.2001 US 799002
(71) Applicant: Chrysalis- ITS Inc., Ottawa, Ontario K2G 6P9 (CA)
(72) Inventor: Couillard, Bruno, Gatineau, Quebec J8T 7Y6 (CA)
(74) Representative: Kehl, Günther, Dipl.-Phys.

(57) **Abstract**

Disclosed is a method and system for synchronizing a timing device, for instance a real time clock that is embodied on a time-stamping cipher module, of a system via a communications network having an unknown transmission time with timing devices of n systems. At least a first and a second set of time synchronization signals are iteratively exchanged between the systems via the communications network. Data relating to a communication delays between the systems and statistical data relating to at least one of a precision of the synchronization and a convergence of the iteratively exchanged time synchronization data is determined. When the data relating to a precision of the synchronization are within predetermined threshold values, the system is synchronized. Further, when the data relating to a convergence of the iteratively exchanged time synchronization data is indicative of other than convergence, irregular communications network behavior is indicated and the system sends at least an error message in dependence thereon.

## Description

### Field of the Invention

This invention relates to time synchronization, and in particular to a method for synchronizing a real time clock of a client station via a communications network having an unknown transmission time.

### Background of the Invention

Most conventional computer systems maintain an internal clock to keep track of the time of day. Accurate time of day measurements are required in a wide variety of applications such as managing and tracking electronic mail, timing back-ups of data on a network, synchronizing communications between clients and servers, managing multimedia teleconferences, and assigning a correct time to documents or transactions. Since the internal clock of conventional computer systems is not perfectly accurate, as time goes by the internal time maintained by the internal clock diverges from the external time with which the internal clock was previously synchronized. This time divergence is sometimes called "clock drift". Typically the internal clock's time drifts away from the external time as a linear function of elapsed time since synchronization. To prevent the clock drift from getting too large, from time to time the internal clock is resynchronized with the external reference time. Time services exist which provide accurate time information using an "atomic clock". One well-known time service is WWV, which broadcasts a Universal Time Signal.

Various solutions have been developed to synchronize the time clock of a computer system. A simple method is for a user of the computer system to manually adjust the clock whenever the clock appears to have drifted. This technique, however, is both inconvenient for the user and subject to its own inaccuracies.

Also, time sources such as WWV occasionally introduce "leap seconds" to synchronize their time with the motions of the planet Earth. To prevent error from accumulating due to drift and leap seconds, it is particularly desirable to synchronize the internal clock of a computer system with the external reference time automatically, such that the intervention of a user or network administrator is other than necessary.

Some prior art methods for synchronizing the internal clock employ a round trip scheme in which a computer system sends a synchronization request to a time service and the time service responds by sending a synchronization message. The inaccuracy of time provided to a computer system is directly related to the total elapsed time for the round trip sequence of messages. Thus, the precision with which clock synchronization can be achieved is limited by the time required for the round trip sequence.

A particular type of round trip synchronization, called Probabilistic Clock Synchronization has been used for synchronizing internal times of computer systems with a reference time from an external source via a communications network. The technique is described in Cristian, "Probabilistic Clock Synchronization", IBM Technical Disclosure Bulletin, Vol. 31, No. 2 (July 1988), p. 91, which is incorporated herein by reference. The basic round trip sequence works as follows: A client station sends a synchronization request at a time t, according to its clock. A time server responds with a message giving a time T, according to the server's time clock. The client station receives the response at a time t'. It is thus established that the server's time T falls somewhere within the time interval between the client stations times t and t'. Preferably, T is synchronized with the midpoint of the interval between t and t'. Thus, the precision of the client station's synchronization is accurate to within (t' - t)/2. If the achieved precision is not considered good enough, the round trip message exchange sequence is repeated. This method provides means for taking the roundtrip delay time into account and, therefore, reducing the error occurring due to the transmission. Unfortunately, this method requires a substantial amount of processing in real time. Further unfortunately, the round trip message exchange sequence is repeated between the same client server and the same time server only, such that tampering with the messages by an unauthorized third party is other than likely to be detected.

An improved version of "Cristian's" method is disclosed by Cheung et al. in United States patent number 5,535,217 issued July 9, 1996, which is incorporated herein by reference. Enhanced precision is achieved by computing a new precision range for the synchronized time based on an intersection between precision intervals of the client station's time and the time server's time. Unfortunately, also this method requires a substantial amount of processing in real time. Furthermore, both methods determine the time elapsed to transmit a message from the time server to the client station as half the round trip delay.

In United States patent number 6,023,769 issued February 8, 2000, Gonzalez discloses a method and apparatus for synchronizing an imprecise time clock maintained by a computer system wherein a first time reading is obtained from a local timing service at a precision greater than that of the clock, and a second time reading is obtained from a remote time server at a precision greater than that of the clock. The second time reading from the time server is corrected for delays associated with the transmission over the network using the first time reading from the local timing service. This method may be able to give a more correct estimate of the time elapsed to transmit a message from the remote time server to the client station. However, it requires messages being transmitted between the client station and the local timing service at a known transmission time or at a time less than the precision error of the local timing service.

Unfortunately, none of the methods according to the prior art provide for a method of detecting tampering with the messages by the unauthorized third party; for example, a man in the middle attack in which the unauthorized third party deliberately delays the messages in one direction only so as to make the round trip of the messages asymmetric in time. It will be obvious to one of skill in the art when the man in the middle attack is other than detected, rather than synchronizing the internal time of the computer system with an external time source, the internal time of the computer system will instead diverge even farther from the external time source. An institution that requires access to a highly accurate local time value will experience at least an interruption of service and may additionally suffer unnecessary financial losses as a result of an inability to synchronize the internal time of the computer system with an external time source. For instance, it would be other than possible for an online auction service to correctly track electronic bids and establish a time priority for each bid received after coming under an attack of the man in the middle nature.

It would be advantageous to provide a method and a system for automatically synchronizing the internal time of a client station to the internal time of a plurality of other computer systems via a communications network.

### Object of the Invention

It is an object of the present invention to provide a method for synchronizing a timing device of a client station that substantially reduces the error due to a round trip delay of messages transmitted via a communications network.

It is another object of the present invention to provide a method for synchronizing a timing device of a client station that substantially reduces the risk of tampering by an unauthorized third party.

### Summary of the Invention

Synchronizing the internal time of the client station to the at least two other systems increases the statistical likelihood of detecting any unauthorized tampering with the time synchronization messages. With normal network delays, the synchronization method will eventually lead to a convergence to a single time value for every system. Variable communication delays between the first client station and one of the other systems, for instance the unauthorized tampering by a man-in-the-middle, prevents synchronization to a single time value. When the synchronization tends to diverge from a single time value, unauthorized tampering is indicated. The system sends a message to indicate the suspected tampering and suspends time stamping functions until a trusted time value is provided to the system.

In accordance with the invention there is provided a method for synchronizing a timing device of a system via a communications network comprising the steps of:
a) transmitting between a first system and a second system a signal dependent on a current time of one of the first and second systems;
b) transmitting between the second system and a third system a signal dependent on a current time of one of the second and third systems;
c) transmitting between the first system and the third system a signal dependent on a current time of one of the first and third systems;
d) transmitting between the first system and the second system another signal dependent on a current time of one of the first and second systems;
e) transmitting between the second system and the third system another signal dependent on a current time of one of the second and third systems;
f) transmitting between the first system and the third system another signal dependent on a current time of one of the first and third systems; and,
g) determining synchronization data for synchronizing the systems and statistical data relating to a precision of the synchronization based on the signals and the other signals.

In accordance with the invention there is further provided a method for synchronizing a timing device of some of n systems via a communications network comprising the steps of:
a) providing first synchronization signals via the communications network to other of the n systems from another of the n systems wherein synchronization signals are provided from at least two of the n systems, and wherein at least a first of the n systems receive the first synchronization signal from two different systems of the n systems;
b) determining first synchronization data for adjusting a time value associated with the at least a first of the n systems;
c) providing second synchronization signals via the communications network to other of the n systems from another of the n systems wherein second synchronization signals are provided from at least two of the n systems, and wherein at least a first of the n systems receive second synchronization signals from two different systems of the n systems;
d) determining second synchronization data for adjusting a time value associated with at least some of the n systems and statistical data relating to a precision of the synchronization based on the second synchronization signals and the first synchronization data.

In accordance with the invention there is further provided a method for synchronizing a timing device of a system via a communications network with timing devices of n systems comprising the steps of:
a) providing a plurality of systems and defining a closed loop and direction for same such that each system has a previous system within the loop and a next system within the loop;
b) transmitting between a each system and a next system a signal dependent on a current time of one of the each system and the next system;
c) transmitting between the each system and a next system another signal dependent on a current time of one of the each system and the next system;
d) determining synchronization data for synchronizing the systems and statistical data relating to a precision of the synchronization based on the signals and the other signals.

In accordance with the invention there is further provided a system for synchronizing a timing device comprising:
a timing device;
   a input/output port for iteratively exchanging at least time synchronization data with two other computer systems via a communications network; and,
   a processor connected to the timing device, the processor for determining statistical data relating to a precision of the synchronization and for determining a convergence value of the iteratively exchanged time synchronization data between the system and
   both of the two other computer systems, the convergence value relating to an improvement in precision of synchronization between the system and the two other computer systems between successive iterations and for adjusting the timing device of the system in dependence upon the statistical data and the convergence value.

Advantageously, the present invention allows large organizations that operate a plurality of servers at remote locations to synchronize every server at a same time. Further advantageously, as the number of servers participating in the synchronization increases, the reliability of statistical information that is determined in dependence upon the synchronization increases, such that the probability of detecting irregular network delays or unauthorized tampering also increases.

### Brief Description of the Drawings

Exemplary embodiments of the invention will now be described in conjunction with the drawings, in which:

Fig. 1a is a simplified block diagram of a first client station and a second client station communicating with a time server via a communications network according to the present invention;

Fig. 1b is a simplified block diagram of a first client station, a second client station and a third client station communicating via a communications network according to the invention;

Fig. 2a is a simplified flow diagram of a method for synchronizing a timing device of two client stations to a time server according to the present invention;

Fig. 2b is a simplified flow diagram of a method for synchronizing a timing device of two client stations according to the present invention;

Fig. 3a is a simplified block diagram showing the synchronization steps of a preferred embodiment of an implementation of the method described with reference to Fig. 2b for an ideal network;

Fig. 3b is a simplified block diagram showing the synchronization steps of a preferred embodiment of an implementation of the method described with reference to Fig. 2b for a network including expected round trip transmission delays;

Fig. 3c is a simplified block diagram showing the synchronization steps of a preferred embodiment of an implementation of the method described with reference to Fig. 2b for a network including expected round trip transmission delays and unexpected delays caused by unauthorized with the time synchronization signals.

### Detailed Description of the Invention

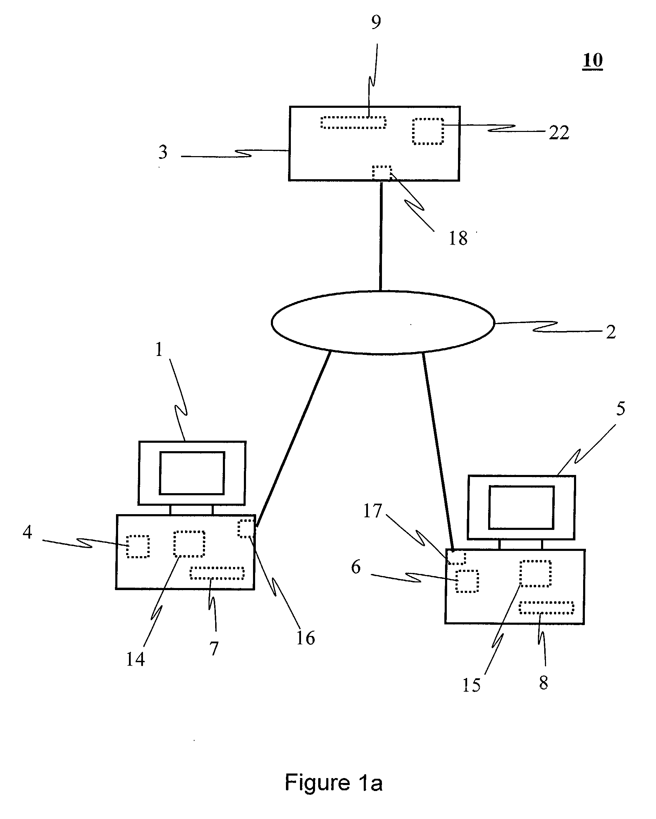

Referring to Fig. 1a, a simplified block diagram of a first preferred embodiment of a system according to the present invention is shown generally at **10.** Shown are a first client station **1** and a second client station **5,** said first and second client stations being in communication with each other and with a time server **3** via a widely distributed communications network **2,** such as the Internet of the World Wide Web (WWW). The time server **3,** for instance an atomic clock time server, is for providing periodically a time signal to each said client station, such time signals being used to synchronize a local time value maintained by a timing device, for instance an internal clock of each said client station, to a trusted external time value. The first client station **1** includes a processor **7** for synchronizing a timing device **4** of the first client station, a memory circuit **14** for storing time synchronization data and an input/output port **16** for exchanging signals with other systems via the communication network **2.** The second client station **5** includes a processor **8** for synchronizing a timing device **6** of the second client station, a memory circuit **15** for storing time synchronization data and an input/output port **17** for exchanging signals with other systems via the communication network **2.** The time server **3** includes a processor **9** for processing time synchronization signals received from the first and second client stations and for determining statistical correlations indicative of communications network delay times, a timing device **22** for providing at least a signal including a universal time signal, and an input/output port **18** for exchanging the at least a signal with other systems via the communication network **2.**

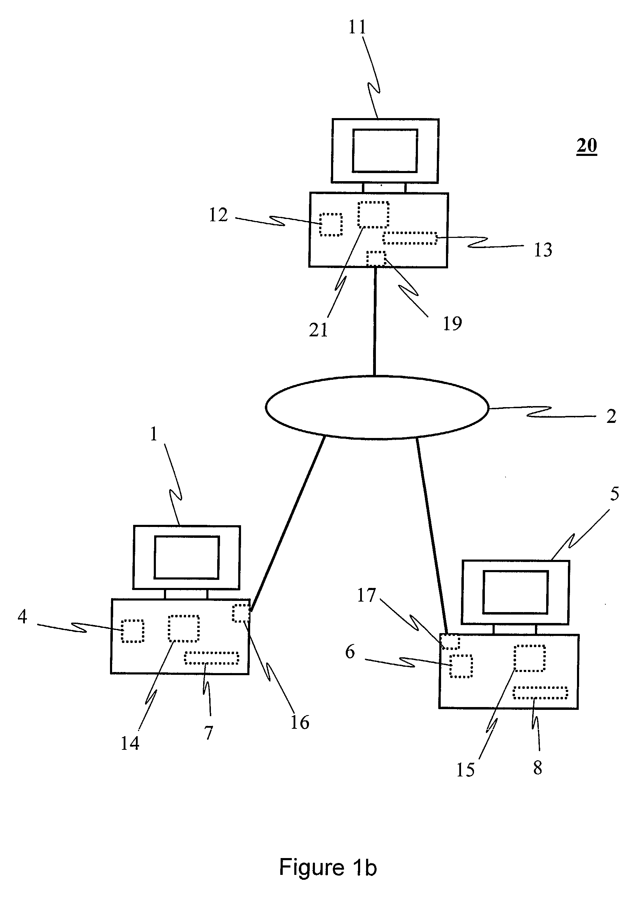

Referring to Fig. 1b, a simplified block diagram of a second preferred embodiment of a system according to the present invention is shown generally at **20.** A first client station **1,** a second client station **5** and a third client station **11** are in communication via a widely distributed communications network **2,** such as the Internet of the World Wide Web (WWW). The first client station **1** includes a processor **7** for synchronizing a timing device **4** of the first client station, a memory circuit **14** for storing time synchronization data and an input/output port **16** for exchanging signals with other systems via the communication network **2.** The second client station **5** includes a processor **8** for synchronizing a timing device **6** of the second client station, a memory circuit **15** for storing time synchronization data and an input/output port **17** for exchanging signals with other systems via the communication network **2.** The third client station **11** includes a processor **13** for synchronizing a timing device **12** of the third client station, a memory circuit **21** for storing time synchronization data and an input/output port **19** for exchanging signals with other systems via the communication network **2.**

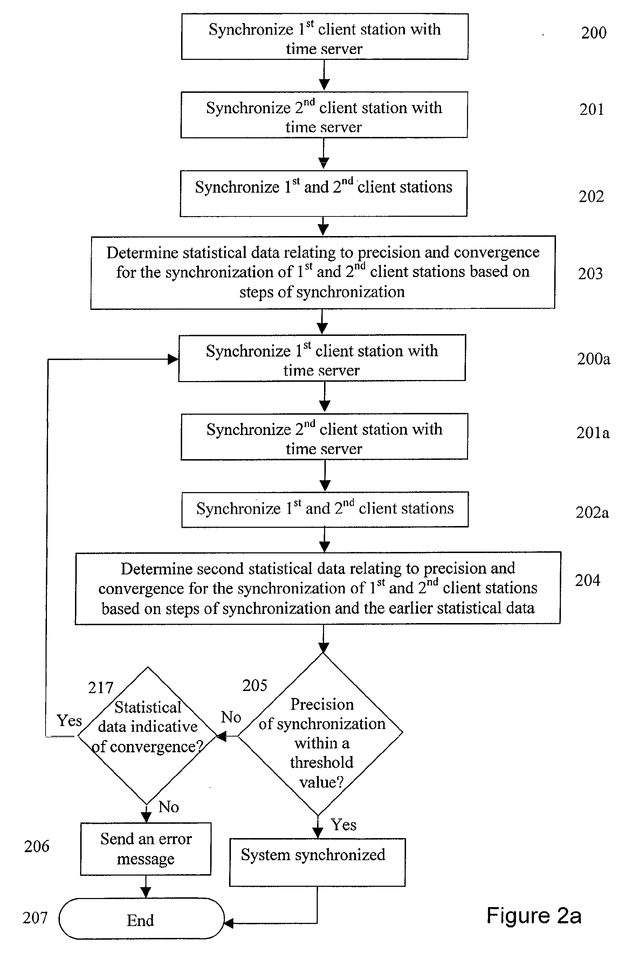

Referring to Fig. 2a, shown is a simplified flow diagram of a method for synchronizing the system **10** described previously with reference to Fig. 1a. A first client station **1** and a second client station **5** are in communication with each other and with a time server **3** via a widely distributed communications network **2.** In a first preferred embodiment of the present invention, the method for synchronizing a timing device **4** and **6** of said first and second client station **1** and **5,** respectively, is initiated by the time server **3** at the end of a pre-determined time period by transmitting a time synchronization signal including at least a universal time signal to each client station **1** and **5.**

The timing devices **4** and **6** of the first and second client stations **1** and **5,** respectively, are synchronized independently of one another to the timing device **22** of the time server **3.** In step **200** the first client station **1** receives a first synchronization signal from the time server **3** via the communications network **2** and attaches a local time of receipt of said first synchronization signal. Conveniently, when the timing device **4** is embodied on a time stamping cipher module of the first client station, the first client station **1** simply time stamps the first synchronization signal using a time value provided by the timing device **4.** Advantageously, the time stamp may further include an authenticator for identifying the first client station **1.** The first client station **1** returns the time stamped first synchronization signal to the time server **3.** Upon receipt of the time stamped first synchronization signal at the time server **3,** the time server **3** determines a round trip delay time of the first synchronization signal caused by the communications network **2.** The time server **3** processes said time stamped first synchronization signal using processor **9** to determine a time offset value for synchronizing timing device **4** in dependence upon a difference between the local time of receipt of the first synchronization signal at the first client station, the expected local time of receipt of the first synchronization signal at the first client station and the determined round trip delay time of the first synchronization signal caused by the communications network **2**. Time server **3** sends a signal in dependence upon the determined time offset value to the first client station **1** via the communications network **2.** Processor **7** of client station **1** adds said time offset value to the local time value maintained by timing device **4.** Of course, the time server is a "read only" device, such that synchronization between the first client station **1** and the time server **3** is effected by adjusting only the value maintained by timing device **4** of the first client station **1.**

In step **201** the second client station **5** receives a second synchronization signal from the time server **3** via the communications network **2** and attaches a local time of receipt of said second synchronization signal. Conveniently, when the timing device **6** is embodied on a time stamping cipher module of the second client station, the second client station **5** simply time stamps the second synchronization signal using a time value provided by the timing device **6.** Advantageously, the time stamp may further include an authenticator for identifying the second client station **5.** The second client station **5** returns the time stamped second synchronization signal to the time server **3.** Upon receipt of the time stamped second synchronization signal at the time server **3,** the time server **3** determines a round trip delay time of the second synchronization signal caused by the communications network **2.** The time server **3** processes said time stamped second synchronization signal using processor **9** to determine a time offset value for synchronizing timing device **6** in dependence upon a difference between the local time of receipt of the second synchronization signal at the second client station, the expected local time of receipt of the second synchronization signal at the second client station and the determined round trip delay time of the second synchronization signal caused by the communications network **2.** Time server **3** sends a signal in dependence upon the determined time offset value to the second client station **5** via the communications network **2.** Processor **8** of client station **5** adds said time offset value to the local time value maintained by timing device **6.** Of course, the time server is a "read only" device, such that synchronization between the second client station **5** and the time server **3** is effected by adjusting only the value maintained by timing device **6** of the second client station **5.**

Similarly, in step **202** the first client station **1** and the second client station **5,** synchronize with each other via the communications network **2.** The first client station **1** time stamps a third synchronization signal with a time of transmission using a local time provided by timing device **4.** The first client station **1** transmits said third synchronization signal to the second client station **5** via the communications network **2.** Upon receipt of said third synchronization signal the second client station **5** time stamps the third synchronization signal with a local time of receipt provided by the timing device **6** and returns said time stamped third synchronization signal to the first client station **1** via the communications network **2.** Upon receipt of the time stamped third synchronization signal at the first client station **1,** the first client station **1** determines a round trip delay time of the third synchronization signal caused by the communications network **2.** The first client station **1** processes said time stamped third synchronization signal using processor **7** and determines synchronization data for synchronizing timing device **4** and timing device **6** in dependence upon a difference between the local time of receipt of the third synchronization signal at the second client station **5,** the expected local time of receipt of the third synchronization signal at the second client station **5** and the determined round trip delay time of the third synchronization signal caused by the communications network **2.**

Timing devices **4** and **6** are synchronized. Processor **7** of client station **1** uses said synchronization data to adjust a local time value maintained by timing device **4** to be approximately a same time value as the local time value maintained by timing device **6.**
More preferably, processor **7** of client station **1** transmits a signal including said synchronization data to client station **5.** Processor **7** of client station **1** and processor **8** of client station **5** use said synchronization data to adjust the local time values maintained by each of timing devices **4** and **6,** respectively, to be a time value approximately intermediate the two local time values maintained by each of timing devices **4** and **6.**

Step **203** is optionally performed, wherein the system determines a value relating to a precision of the synchronization method based on the first set of synchronization signals.

The steps **200, 201** and **202** as described above are repeated at steps **200a, 201a** and **202a.** For instance a second set of synchronization signals are exchanged for performing the method outlined with reference to steps **200, 201** and **202.** Having performed steps **200, 201** and **202** and steps **200a, 201a** and **202a,** the system determines at step **204** statistical data relating to a precision of the synchronization and to a convergence of the synchronization method based on the first set of synchronization signals or the value relating to a precision of the synchronization determined optionally in step **203**, and the second set of synchronization signals. The statistical data determined at step **204** is compared to threshold values at step **205** to determine if the precision of the synchronization is within a predetermined tolerance. The predetermined tolerance varies in dependence upon the level of precision and accuracy that are required by each unique system. When the precision of the synchronization is within a predetermined tolerance the system is synchronized and the method terminates at step **207**.

Depending upon the number of client stations participating in a synchronization, an initial precision of synchronization between the timing devices of said client stations and the delays associated with the communication network, the precision of the synchronization may be other than within threshold values, as determined at step **205.** It may be further determined at step **217,** however, that the statistical data relating to a convergence of the synchronization method is within predetermined threshold values. When the statistical data indicates that the system is achieving eventual convergence, the synchronization steps **200a, 201a** and **202a,** the determination step **204** and the comparison steps **205** and **217** are repeated in dependence upon the precision of the synchronization achieving a value within the predetermined tolerance. When the precision of the synchronization is within a predetermined tolerance the system is synchronized and the method terminates at step **207.**

Of course, irregular delays associated with the communications network, for instance a delay caused by a man in the middle attack, prevents the system from converging to a single time value, such that synchronization is other than possible. When it is determined at step **217** that the statistical data relating to a convergence of the synchronization method is other than within predetermined threshold values, an error message is sent at step **206.** Optionally, the system suspends all time stamping functions until a trusted time is provided to the system.

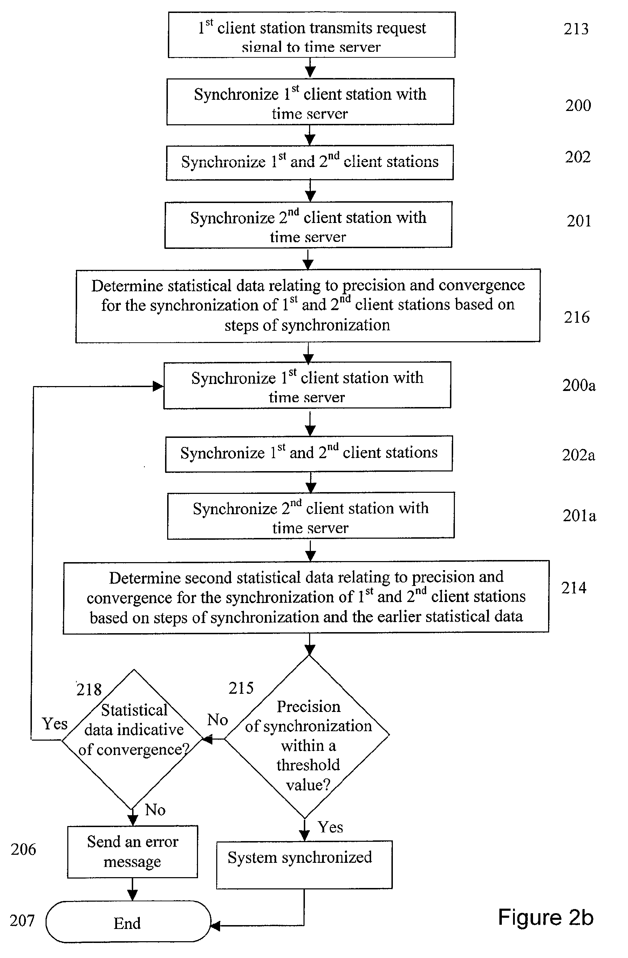

A second preferred embodiment of the synchronization method according to the present invention is described with reference to Fig. 2b. One of said first and second client stations **1** and **5,** respectively, for instance the first client station **1,** initiate the synchronization method by transmitting a first synchronization signal to the time server **3** at step **213.** The first synchronization signal includes one of a time synchronization request and a status signal indicative of a status of the first client station **1** that is other than synchronized. The time server **3** responds to said request signal by attaching to said first synchronization signal at least a local time of receipt of the first synchronization signal at the time server **3,** for instance time stamping the first synchronization signal, and returning at step **200** the time stamped first synchronization signal to the first client station **1.** Upon receipt of the time stamped first synchronization signal at the first client station **1**, the first client station **1** determines a round trip delay time of the first synchronization signal caused by the communications network **2.** The first client station **1** processes said time stamped first synchronization signal using processor **7** to determine a time offset value for synchronizing timing device **4** in dependence upon a difference between the local time of receipt of the first synchronization signal at the time server **3,** the expected local time of receipt of the first synchronization signal at the time server **3** and the determined round trip delay time of the first synchronization signal caused by the communications network **2.** Processor **7** of the first client station **1** adds said time offset value to the local time value maintained by timing device **4.** Of course, the time server is a "read only" device, such that synchronization between the client station **1** and the time server **3** is effected by adjusting only the value maintained by timing device **4** of the first client station **1.**

Similarly, the first client station **1** sends at step **202** a signal for synchronizing with the second client station **5.** As previously described with reference to the first preferred embodiment, the first client station **1** time stamps a second synchronization signal with a time of transmission using a local time provided by timing device **4.** Conveniently, when the timing device **4** is embodied on a time stamping cipher module of the first client station, the first client station **1** simply time stamps the second synchronization signal using a time value provided by the timing device **4.** Advantageously, the time stamp may further include an authenticator for identifying the first client station **1.** The first client station **1** transmits the second synchronization signal to the second client station **5** via the communications network **2.** Upon receipt of the second synchronization signal the second client station **5** time stamps the second synchronization signal with a local time of receipt provided by the timing device **6** and returns the time stamped second synchronization signal to the first client station **1** via the communications network **2.** Conveniently, when the timing device **6** is embodied on a time stamping cipher module of the second client station **5,** the second client station **5** simply time stamps the second synchronization signal using a time value provided by the timing device **6.** Advantageously, the time stamp may further include an authenticator for identifying the second client station **5.** Upon receipt of the time stamped second synchronization signal at the first client station **1,** the first client station **1** determines a round trip delay time of the second synchronization signal caused by the communications network **2.** The first client station **1** processes the time stamped second synchronization signal using processor **7** and determines synchronization data for synchronizing timing device **4** and timing device **6** in dependence upon a difference between the local time of receipt of the synchronization signal at the second client station **5,** the expected local time of receipt of the synchronization signal at the second client station **5** and the determined round trip delay time of the third synchronization signal caused by the communications network **2.**

Timing devices **4** and **6** are synchronized. Processor **7** of client station **1** uses said synchronization data to adjust a local time value maintained by timing device **4** to be approximately a same time value as the local time value maintained by timing device **6.** More preferably, processor **7** of client station **1** transmits a signal including said synchronization data to client station **5.** Processor **7** of client station **1** and processor **8** of client station **5** use said synchronization data to adjust the local time values maintained by each of timing devices **4** and **6,** respectively, to be a time value approximately intermediate the two local time values maintained by each of timing devices **4** and **6.**

At step **201** the second client station **5** synchronizes to the time server **3,** for example the second client station **5** sends third time synchronization signal to the time server **3** in dependence upon having received the second synchronization signal from the first client station **1.** The time server **3** responds to said third time synchronization signal by attaching to said third time synchronization signal at least a local time of receipt of the third time synchronization signal at the time server **3,** for instance time stamping the third time synchronization signal, and returning the third time synchronization signal to the second client station **5.** Upon receipt of the time stamped third time synchronization signal at the second client station **5,** the second client station **5** determines a round trip delay time of the third time synchronization signal caused by the communications network **2.** The second client station **5** processes said time stamped third time synchronization signal using processor **8** to determine a time offset value for synchronizing timing device **6** in dependence upon a difference between the local time of receipt of the third time synchronization signal at the time server **3,** the expected local time of receipt of the third time synchronization signal at the time server **3** and the determined round trip delay time of the third time synchronization signal caused by the communications network **2**. Processor **8** of the second client station **5** adds said time offset value to the local time value maintained by timing device **6.** Of course, the time server **3** is a "read only" device, such that synchronization between the client station **5** and the time server **3** is effected by adjusting only the value maintained by timing device **6** of the second client station **5.**

Step **216** is optionally performed, wherein the system determines a value relating to a precision of the synchronization method based on the first set of synchronization signals.

The steps **200, 202** and **201** as described above are repeated at steps **200a, 202a** and **201a.** For instance a second set of synchronization signals are exchanged for performing the method outlined with reference to steps **200, 202** and **201.** Having performed steps **200, 202** and **201** and steps **200a, 202a** and **201a,** the system determines in step **214** statistical data relating to a precision of the synchronization and to a convergence of the synchronization method based on the first set of synchronization signals or the value relating to a precision of the synchronization method determined optionally at step **216,** and the second set of synchronization signals. The statistical data is compared to threshold values at step **215** to determine if the precision of the synchronization is within a predetermined tolerance. The predetermined tolerance varies in dependence upon the level of precision and accuracy that are required by each unique system. When the precision of the synchronization is within a predetermined tolerance the system is synchronized and the method terminates at step **207.**

Depending upon the number of client stations participating in a synchronization, an initial precision of synchronization between the timing devices of said client stations and the delays associated with the communication network, the precision of the synchronization may be other than within threshold values, as determined at step **215.** It may be further determined at step **218,** however, that the statistical data relating to a convergence of the synchronization method is within predetermined threshold values. When the statistical data indicates that the system is achieving eventual convergence, the synchronization steps **200a, 202a** and **201a,** the determination step **214** and the comparison steps **215** and **218** are repeated in dependence upon the precision of the synchronization achieving a value within the predetermined tolerance. When the precision of the synchronization is within a predetermined tolerance the system is synchronized and the method terminates at step **207.**

Of course, irregular delays associated with the communications network, for instance a delay caused by a man in the middle attack, prevents the system from converging to a single time value, such that synchronization is other than possible. When it is determined at step **218** that the statistical data relating to a convergence of the synchronization method is other than within predetermined threshold values, an error message is sent at step **206.** Optionally, the system suspends all time stamping functions until a trusted time is provided to the system.

In a third preferred embodiment of the synchronization method according to the present invention, one of said first and second client stations **1** and **5,** respectively, for instance the first client station **1,** initiate the synchronization method by transmitting a signal to the time server **3.** The signal includes one of a time synchronization request and a status signal indicative of a status of the first client station **1** that is other than synchronized. The time server **3** responds to said signal by initiating the first preferred embodiment of the synchronization method according to the present invention, as previously described.

Each of the first, second and third preferred embodiments of a synchronization method according to the present invention teaches synchronizing a timing device of a first system to a timing device of a second other system and to a timing device of a third other system, wherein one of the second other system and the third other system is a time server for broadcasting a universal time signal. Advantageously, the method according to each of the first, second and third preferred embodiments is suitable for synchronizing simultaneously at least two client stations to an approximately same time value, wherein the approximately same time value is calibrated to a trusted external time source. The method is suitable for application to systems that require a high degree of accuracy as well as precision in the time values that are used to carry out various transactions. Further advantageously, the method can be executed automatically by the system, at predetermined times when communications traffic on the servers is minimal. Alternatively, the method can be executed in dependence upon the detection of a status of other than synchronization within a specific system. Further advantageously, as the number of client stations participating in the synchronization method increases, the amount of statistical data relating to a precision of the synchronization and to a convergence of the synchronization method based on the exchanged synchronization signals and past synchronization data also increases. Improved statistical data enhances the ability of the system to detect irregular communication network delays, resulting in higher sensitivity of the system to the effects of unauthorized tampering. Of course, the signals exchanged between the systems may each comprise a plurality of data packets, each said data packet being sent at a predetermined time such that temporal spacing between consecutive packets are a same. Transmitting a plurality of packets and evaluating the transmission of the plurality of packets substantially increases accuracy if a sufficiently large number of packets are used having predetermined spacing therebetween. Furthermore, it allows statistical evaluation of the transmission through the network in order to detect any irregularities such as technical problems or tampering with the packets by an unauthorized third party.

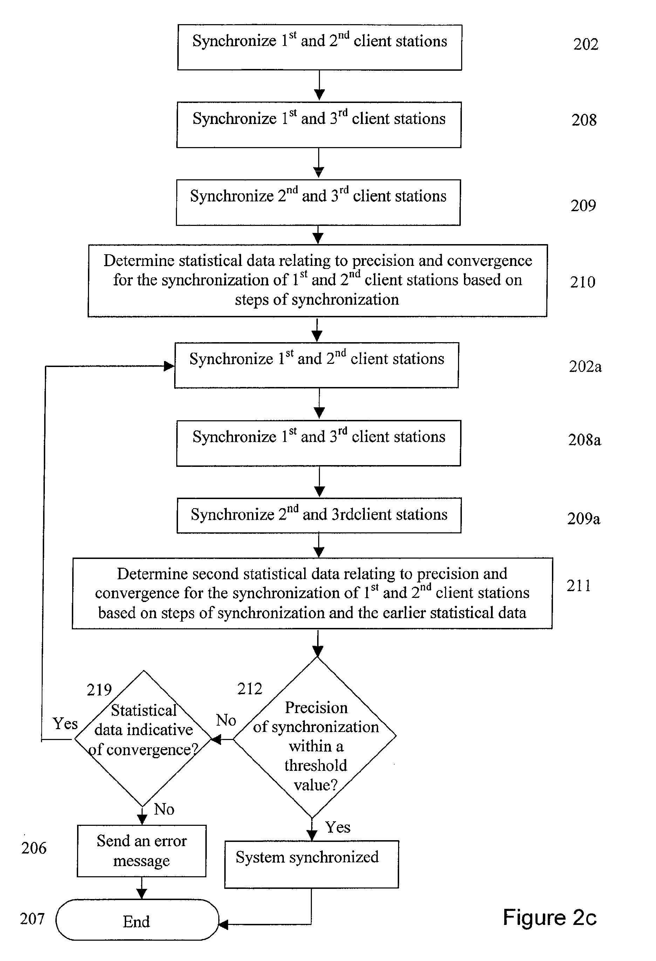

Referring to Fig. 2c, shown is a simplified flow diagram of a method for synchronizing the system **20** previously described with reference to Fig. 1b. A plurality of n client stations is in communication via a communications network. A first client station **1** sends at step **202** a first synchronization signal for synchronizing with the second client station **5,** the first synchronization signal including at least a local time associated with the first client station **1.** Conveniently, when the timing device **4** is embodied on a time stamping cipher module of the first client station **1,** the first client station **1** simply time stamps the first synchronization signal using a time value provided by the timing device **4.** For instance, the first client station **1** time stamps the first synchronization signal with a time of transmission using a local time provided by timing device **4.** Advantageously, the time stamp may further include an authenticator for identifying the first client station **1.** The first client station **1** transmits the first synchronization signal to the second client station **5** via the communications network **2.** Upon receipt of the first synchronization signal the second client station **5** time stamps the synchronization signal with a local time of receipt provided by the timing device **6** and returns the time stamped first synchronization signal to the first client station **1** via the communications network **2**. Conveniently, when the timing device **6** is embodied on a time stamping cipher module of the second client station, the second client station **5** simply time stamps the first synchronization signal using a time value provided by the timing device **6.** Advantageously, the time stamp may further include an authenticator for identifying the second client station **5.** Upon receipt of the time stamped first synchronization signal at the first client station **1,** the first client station **1** determines a round trip delay time of the first synchronization signal caused by the communications network **2.** The first client station **1** processes the time stamped first synchronization signal using processor **7** and determines synchronization data for synchronizing timing device **4** and timing device **6** in dependence upon a difference between the local time of receipt of the first synchronization signal at the second client station **5,** the expected local time of receipt of the first synchronization signal at the second client station **5** and the determined round trip delay time of the first synchronization signal caused by the communications network **2.**

Timing devices **4** and **6** are synchronized. Processor **7** of client station **1** uses said synchronization data to adjust a local time value maintained by timing device **4** to be approximately a same time value as the local time value maintained by timing device **6.** More preferably, processor **7** of client station **1** transmits a signal including said synchronization data to client station **5.** Processor **7** of client station **1** and processor **8** of client station **5** use said synchronization data to adjust the local time values maintained by each of timing devices **4** and **6,** respectively, to be a time value approximately intermediate the two local time values maintained by each of timing devices **4** and **6.**

Similarly, in step **208** the first client station **1** and a third client station **11,** synchronize with each other via the communications network **2.** The first client station **1** sends a second synchronization signal for synchronizing with the third client station **11,** the first synchronization signal including at least a local time associated with the first client station **1,** via the communications network **2.** Upon receipt of said second synchronization signal the third client station **11** time stamps the second synchronization signal with a local time of receipt provided by the timing device **12** and returns said second synchronization signal to the first client station **1** via the communications network **2.** Conveniently, when the timing device **12** is embodied on a time stamping cipher module of the third client station, the third client station **11** simply time stamps the second synchronization signal using a time value provided by the timing device **12.** Advantageously, the time stamp may further include an authenticator for identifying the third client station **11.** Upon receipt of the second synchronization signal at the first client station **1,** the first client station **1** determines a round trip delay time of the second synchronization signal caused by the communications network **2.** The first client station **1** processes said time stamped second synchronization signal using processor **7** and determines synchronization data for synchronizing timing device **4** and timing device **12** in dependence upon a difference between the local time of receipt of the second synchronization signal at the third client station **11,** the expected local time of receipt of the second synchronization signal at the third client station **5** and the determined round trip delay time of the second synchronization signal caused by the communications network **2.**

Timing devices **4** and **12** are synchronized. Processor **7** of client station **1** uses said synchronization data to adjust a local time value maintained by timing device **4** to be approximately a same time value as the local time value maintained by timing device **12.** More preferably, processor **7** of client station **1** transmits a signal including said synchronization data to client station **11.** Processor **7** of client station **1** and processor **13** of client station **11** use said synchronization data to adjust the local time values maintained by each of timing devices **4** and **12,** respectively, to be a time value approximately intermediate the two local time values maintained by each of timing devices **4** and **12.**

In step **209** the second client station **5** and the third client station **11,** synchronize with each other via the communications network **2.** The second client station **5** sends a third synchronization signal for synchronizing with the third client station **11,** the third synchronization signal including at least a local time associated with the second client station **5,** via the communications network **2.** Upon receipt of said third synchronization signal the third client station **11** time stamps the third synchronization signal with a local time of receipt provided by the timing device **12** and returns said time stamped third synchronization signal to the second client station **5** via the communications network **2.** Upon receipt of the time stamped third synchronization signal at the second client station **5,** the second client station **5** determines a round trip delay time of the third synchronization signal caused by the communications network **2.** The second client station **5** processes said time stamped third synchronization signal using processor **8** and determines synchronization data for synchronizing timing device **6** and timing device **12** in dependence upon a difference between the local time of receipt of the third synchronization signal at the third client station **11,** the expected local time of receipt of the third synchronization signal at the third client station **11** and the determined round trip delay time of the third synchronization signal caused by the communications network **2.**

Timing devices **6** and **11** are synchronized. Processor **8** of client station **5** uses said synchronization data to adjust a local time value maintained by timing device **6** to be approximately a same time value as the local time value maintained by timing device **12.** More preferably, processor **8** of client station **5** transmits a signal including said synchronization data to client station **11.** Processor **8** of client station **5** and processor **13** of client station **11** use said synchronization data to adjust the local time values maintained by each of timing devices **6** and **12,** respectively, to be a time value approximately intermediate the two local time values maintained by each of timing devices **6** and **12.**

Step **210** is optionally performed, wherein the system determines a value relating to a precision of the synchronization method based on the first set of synchronization signals.

The steps **202, 208** and **209** as described above are repeated at steps **202a, 208a** and **209a.** For instance a second set of signals are exchanged for performing the method outlined with reference to steps **202, 208** and **209.** Having performed steps **202, 208** and **209** and **202a, 208a** and **209a,** the system determines in step **211** statistical data relating to a precision of the synchronization and to a Convergence of the synchronization method based on the first set of signals or the value relating to a precision of the synchronization method determined optionally at step **210,** and the second set of signals. The statistical data is compared to threshold values at comparison step **212** to determine if the precision of the synchronization is within a predetermined tolerance. The predetermined tolerance varies in dependence upon the level of precision and accuracy that are required by each unique system. When the precision of the synchronization is within a predetermined tolerance the system is synchronized and the method terminates at step **207.**

Depending upon the number of client stations participating in a synchronization, an initial precision of synchronization between the timing devices of said client stations and the delays associated with the communication network, the precision of the synchronization may be other than within threshold values, as determined at comparison step **212.** It may be further determined at comparison step **219,** however, that the statistical data relating to a convergence of the synchronization method is within predetermined threshold values. When the statistical data indicates that the system is achieving eventual convergence, the synchronization steps **202a, 208a** and **209a,** the determination step **211** and the comparison steps **212** and **219** are repeated in dependence upon the precision of the synchronization achieving a value within the predetermined tolerance. When the precision of the synchronization is within a predetermined tolerance the system is synchronized and the method terminates at step **207**.

Of course, irregular delays associated with the communications network, for instance a delay caused by a man in the middle attack, prevents the system from converging to a single time value, such that synchronization is other than possible. When it is determined at step **219** that the statistical data relating to a convergence of the synchronization method is other than within predetermined threshold values, an error message is sent at step **206.** Optionally, the system suspends all time stamping functions until a trusted time is provided to the system.

When only time values local to the client server are used to successfully synchronize the system according to the synchronization method described above, the client stations will agree very closely with each other, for instance the precision of the synchronization will be high. Absent an external time source, such as an atomic clock time server, the local time values to which the method eventually converges may be other than accurate. In many applications it is important only that different servers agree upon a same relative time. For instance, time stamping servers of a same corporation, each server being situated at one of a plurality remotely located satellite offices and connected via a communications network, wherein all time stamping functions are performed for internal use of the same corporation only.

Of course, the widely distributed communications network **2** of system **20** may include a time server (not shown), for instance an atomic clock time server for providing a universal time signal. Each client station may obtain independently a time value from said time server prior to synchronizing time values with the remaining stations. Alternatively, one client station may obtain a time value from said time server and provide said time value to the remaining two client stations prior to synchronizing time values with the remaining two client stations. Further alternatively, the one client station initiates the synchronization method immediately upon obtaining a time value from the time server. Of course, convergence of the synchronization method to an approximately same time value, and wherein an initial time value is provided to least one client station by the time server, results in a synchronization of the system that is precise and that further has improved accuracy. Agreement with an external time source, such as a time server, is crucial when the time stamping functions of a system are other than strictly for internal use within a same corporation, for instance when time stamping functions are for transactions between the systems of different corporations.

Advantageously, the signals exchanged between the systems may each comprise a plurality of data packets, each said data packet being sent at a predetermined time such that temporal spacing between consecutive packets are a same. Transmitting a plurality of packets and evaluating the transmission of the plurality of packets substantially increases accuracy if a sufficiently large number of packets are used having predetermined spacing therebetween. Furthermore, it allows statistical evaluation of the transmission through the network in order to detect any irregularities such as technical problems or tampering with the packets by an unauthorized third party.

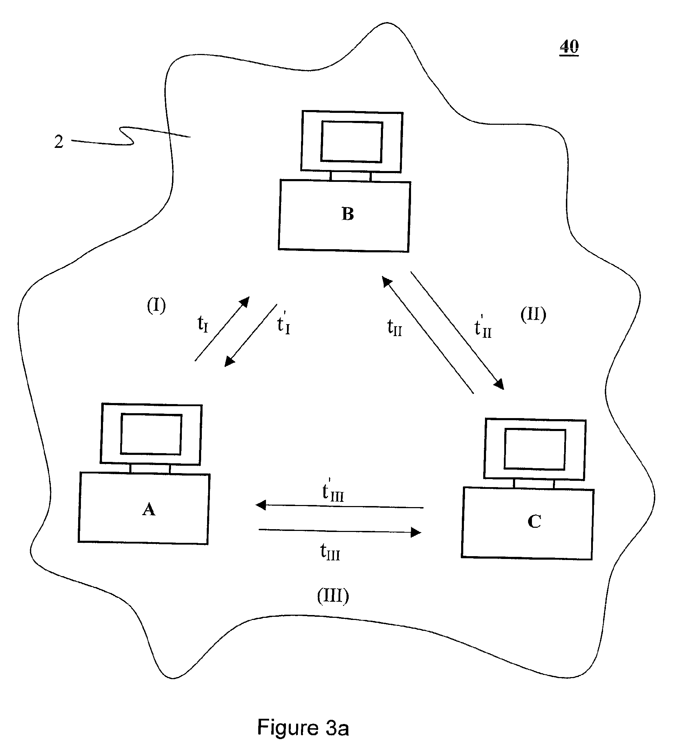

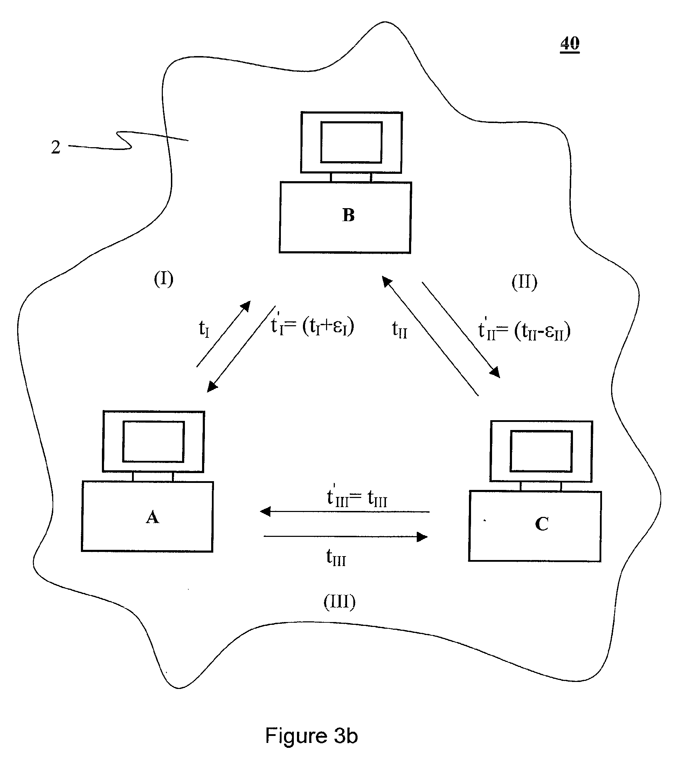

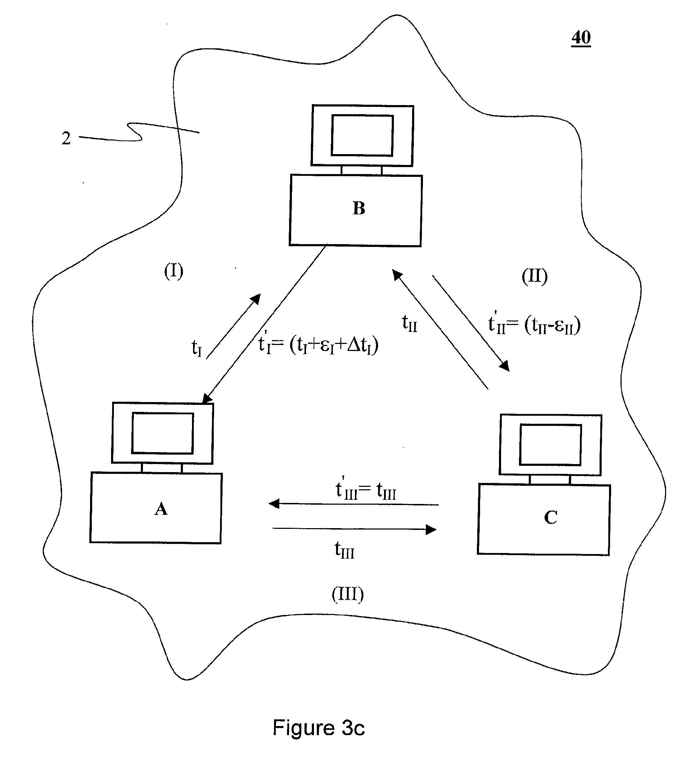

Referring to Fig. 3a, 3b and 3c, shown are three possible situations under which time synchronization signals are transmitted via a communication network **2** according to the present invention. The system shown generally at **40** includes a first computer system A, a second computer system B and a third computer system C. Of course, each computer system A, B and C could be a client station as described with reference to Fig. 1b. Alternatively one computer system, for instance computer system A, could be a time server as described with reference to Fig. 1a. In Fig. 3a, 3b and 3c each arrow represents a transmission of a time synchronization signal between two of said computer systems, said transmission occurring in the direction of said arrow. Further, the length of each arrow is directly proportional to the period of time elapsed between transmission of said signal at an originating computer system and the receipt of said same signal at a receiving computer system.

Referring to Fig. 3a, shown are the time synchronization steps for an ideal communication network **2,** wherein the periods of time required to complete each forward trip (t_{I}, t_{II} and t_{III}) are equal to the periods of time required to complete each corresponding reverse trip (t'_{I}, t'_{II} and t'_{III}). Under these ideal conditions the method described with respect to Fig. 2b will converge immediately to a single value. Note that the total round trip time interval between each pair of client stations is different, and that the synchronization method is other than affected by said difference in total round trip time interval.

Referring to Fig. 3b the time synchronization steps for a communications network **2** are shown. The arrow representing the forward portion of synchronization step (I) is shorter than the arrow representing the corresponding reverse portion, for instance t_{I}=t'_{I}+ε_{I}, wherein ε_{I} is a delay caused by the communications network **2** during the reverse portion of synchronization step (I). Alternatively, ε_{I} is a net delay observed when there is a similar delay for both the forward and the reverse portions of synchronization step (I). Based on an assumption that communications between two computer systems connected via the communications network **2** are symmetric in time, the precision of synchronization step (I) is related to ε_{I}/2. Alternatively, the arrow representing the forward portion of synchronization step (II) is longer than the arrow representing the corresponding reverse portion and reverse portion, for instance t_{II}=t'_{II}-ε_{II}, wherein ε_{II} is a delay caused by the communications network **2** during the forward portion of synchronization step (II). Alternatively, ε_{II} is a net delay observed when there is a similar delay for both the forward and the reverse portions of synchronization step (II). Similarly, the precision of synchronization step (II) is related to ε_{II}/2. Further, in the case of synchronization step (III) the apparent delay ε_{III} is zero. Of course, it is possible that the ε_{III} is equal for each of the forward and the reverse portion of synchronization step (III), such that the net difference is zero. Under these near ideal conditions, specifically ε_{I} ≈ **ε**_{II} ≈ ε_{III} ≈ 0, the method described with respect to Fig. 2a, 2b or 2c will eventually converge to a single value within a predetermined tolerance. Of course, synchronization steps (I), (II) and (III) are repeated in dependence upon the method converging to a single time value that is precise within the predetermined tolerance required for the specific functions that are being performed on the computer system.

Referring to Fig. 3c the time synchronization steps for a communications network **2** in which tampering by an unauthorized third party is indicated, are shown. In addition to the expected network delay ε_{I}, the unauthorized tampering introduces an additional delay Δt_{I} to the reverse portion of synchronization step (I) only. Based on an assumption that communications between two computer systems connected via the communications network **2** are symmetric, the precision of synchronization step (I) is related to ε_{I}/2. Unauthorized tampering introduces an additional error. Such tampering is other than detectable when transmission are delayed by a similar amount of time in both directions, and the ability of the system is other than affected. Of course, a man in the middle attack affects the transmission of signals in one direction only, as is shown in Fig. 3c. Under conditions of unauthorized tampering, the synchronization method is other than likely to converge to a single time value within predetermined tolerance and within a predetermined maximum number of iteration steps. When a status of other than convergence of the synchronization method is determined, a message indicating suspected unauthorized tampering is logged and the synchronization method is terminated. Advantageously, when the plurality of n client station includes a sufficiently large number of client stations, the statistical data that is accessible allows the system to determine the source of the suspected tampering.

The methods as disclosed above are easily implemented in either of the systems shown in Fig. 1a and Fig. 1b, for example, as a software package for execution on processors **7** and **9** of the client station **1** and the time server **3,** respectively. The software may be distributed on a CD-ROM or via the communications network **2**.

Numerous other embodiments may be envisaged without departing from the spirit or scope of the invention.

## Claims

1. A method for synchronizing a timing device of a system via a communications network comprising the steps of:
a) transmitting between a first system and a second system a signal dependent on a current time of one of the first and second systems;
b) transmitting between the second system and a third system a signal dependent on a current time of one of the second and third systems;
c) transmitting between the first system and the third system a signal dependent on a current time of one of the first and third systems;
d) transmitting between the first system and the second system another signal dependent on a current time of one of the first and second systems;
e) transmitting between the second system and the third system another signal dependent on a current time of one of the second and third systems;
f) transmitting between the first system and the third system another signal dependent on a current time of one of the first and third systems; and,
g) determining synchronization data for synchronizing the systems and statistical data relating to a precision of the synchronization based on the signals and the other signals.

2. The method claimed in claim 1, comprising the additional steps of:
h) comparing the statistical data relating to a precision of the synchronization to predetermined threshold values; and,
i) synchronizing the systems when the statistical data relating to a precision of the synchronization as determined in step g) are within the predetermined threshold values.

3. The method claimed in claim 1, comprising the additional steps of:
h) comparing the statistical data relating to a precision of the synchronization to predetermined threshold values;
i) determining statistical data relating to a convergence of the synchronization method when the statistical data relating to a precision of the synchronization as determined in step g) are other than within the predetermined threshold values;
j) comparing the statistical data relating to a convergence of the synchronization method to convergence values; and,
k) repeating steps a) to g) when the statistical data relating to a convergence of the synchronization method as determined in step i) are within the convergence values.

4. The method claimed in claim 3, comprising the additional step of:
l) sending an error message indicative of a status of other than convergence when the statistical data relating to a convergence of the synchronization method as determined in step i) are other than within the convergence values.

5. The method claimed in claim 1 wherein step a) comprises the steps of:
a1) transmitting between the first system to the second system a signal dependent on a current time of the first system, via the communications network;
a2) receiving the signal at the second system;
a3) determining a time indicative of a local time of receipt of the signal at the second system;
a4) transmitting between the second system to the first system a second signal including the time indicative of a local time of receipt of the signal at the second system, via the communications network;
a5) receiving the second signal at the first system;
a6) determining a time indicative of a local time of receipt of the second signal at the first system; and,
a7) determining data relating to a communication delay between the first and second systems.

6. The method claimed in claim 1, wherein the first, second and third systems synchronize to an approximately same relative time value.

7. The method claimed in claim 1, wherein at least one of the systems is a time server, the time server for transmitting a signal including a universal time signal to at least another system, via the communications network.

8. The method claimed in claim 7, wherein the first, second and third systems synchronize to a same time value, the same time value being a time of the time server.

9. The method claimed in claim 2, wherein the one system adjusts a time value associated with the one system using the synchronization data determined in step g), so as to synchronize with timing devices of the other systems.

10. The method claimed in claim 7, wherein the one system adjusts a time value associated with the one system using the synchronization data determined in step g), so as to synchronize with timing devices of the other systems.

11. The method claimed in claim 1, wherein the signal comprises a plurality of data packets, each said data packet being sent at a predetermined time such that temporal spacing between consecutive packets are known.

12. The method claimed in claim 1, wherein one of the first, second and third systems sends the signal automatically in dependence upon receiving a signal from one of the other systems indicative of a synchronization status that is other than synchronized.

13. A method for synchronizing a timing device of some of n systems via a communications network comprising the steps of:
a) providing first synchronization signals via the communications network to other of the n systems from another of the n systems wherein synchronization signals are provided from at least two of the n systems, and wherein at least a first of the n systems receive the first synchronization signal from two different systems of the n systems;
b) determining first synchronization data for adjusting a time value associated with the at least a first of the n systems;
c) providing second synchronization signals via the communications network to other of the n systems from another of the n systems wherein second synchronization signals are provided from at least two of the n systems, and wherein at least a first of the n systems receive second synchronization signals from two different systems of the n systems; and,
d) determining second synchronization data for adjusting a time value associated with at least some of the n systems and statistical data relating to a precision of the synchronization based on the second synchronization signals and the first synchronization data.

14. The method claimed in claim 13, comprising the additional steps of:
e) comparing the statistical data relating to a precision of the synchronization to predetermined threshold values; and,
f) synchronizing the systems using the second synchronization data for adjusting a time value associated with at least some of the n systems when the statistical data relating to a precision of the synchronization as determined in step d) are within the predetermined threshold values.

15. The method claimed in claim 13, comprising the additional steps of:
e) comparing the statistical data relating to a precision of the synchronization to predetermined threshold values;
f) determining statistical data relating to a convergence of the synchronization method when the statistical data relating to a precision of the synchronization as determined in step d) are other than within the predetermined threshold values;
g) comparing the statistical data relating to a convergence of the synchronization method to convergence values; and,
h) repeating steps a) to d) when the statistical data relating to a convergence of the synchronization method as determined in step f) are within the convergence values.

16. The method claimed in claim 15, comprising the additional step of:
i) sending an error message indicative of a status of other than convergence when the statistical data relating to a convergence of the synchronization method as determined in step f) are other than within the convergence values.

17. The method claimed in claim 14, wherein the n systems synchronize to an approximately same relative time value.

18. The method claimed in claim 14, wherein at least one of the n systems is a time server, the time server for transmitting a signal including a universal time signal to at least another system of the n systems, via the communications network.

19. The method claimed in claim 18, wherein the n systems synchronize to a same time value, the same time value being a time of the time server.

20. The method claimed in claim 11, wherein the synchronization signal comprises a plurality of data packets, each said data packet being sent at a predetermined time such that temporal spacing between consecutive packets are known.

21. The method claimed in claim 11, wherein one system of the n systems sends a signal indicative of a synchronization status that is other than synchronized to at least another system of the n systems, the signal for initiating steps a) to d) of the synchronization method.

22. A system for synchronizing a timing device comprising:
a timing device;
an input/output port for iteratively exchanging at least time synchronization data with two other computer systems via a communications network; and,
a processor connected to the timing device, the processor for determining statistical data relating to a precision of the synchronization and for determining a convergence value of the iteratively exchanged time synchronization data between the system and both of the two other computer systems, the convergence value relating to an improvement in precision of synchronization between the system and the two other computer systems between successive iterations and for adjusting the timing device of the system in dependence upon the statistical data and the convergence value.

23. The system claimed in claim 22, the system comprises:
a memory circuit connected to the processor, the memory circuit for storing executable computer code for use by the processor for iteratively exchanging a time synchronization signal with the two other computer systems via a communications network and for determining data relating to a communication delay between the system and both of the two other computer systems, and for determining statistical data relating to at least one of the precision of the synchronization and the convergence value of the iteratively exchanged time synchronization data, the first memory circuit also for storing said statistical data relating to at least one of the precision of the synchronization and the convergence value of the iteratively exchanged time synchronization data for use by the processor for determining time synchronization data.

24. The system claimed in claim 23, wherein at least one of the two other computer systems is a time server connected to the communications network for broadcasting a universal time signal to at least another computer system via the communications network and, wherein the system and the two other computer systems synchronize to a same time value, the same time value being a time of the time server.

25. The system claimed in claim 23, wherein the system and the two other computer systems synchronize to a same time value and wherein the same time value is a relative time value.

26. The system claimed in claim 23, the system comprises:
a signal generator for providing time synchronization data to the processor for transmission via the communications network to the other system via the communications network, the time synchronization data comprising a plurality of data packets, each said data packet being transmitted at a predetermined time such that temporal spacing between consecutive packets are known.

27. The system claimed in claim 23, the system comprises:
a time stamping cipher module for attaching one of an authenticator identifying the system and a time stamp indicative of a local time, to the at least a time synchronization signal.

28. The system claimed in claim 27, wherein the timing device is embodied on the time stamping cipher module.

29. A method for synchronizing a timing device of a system via a communications network with timing devices of n systems comprising the steps of:
a) providing a plurality of systems and defining a closed loop and direction for same such that each system has a previous system within the loop and a next system within the loop;
b) transmitting between a each system and a next system a signal dependent on a current time of one of the each system and the next system;
c) transmitting between the each system and a next system another signal dependent on a current time of one of the each system and the next system; and,
d) determining synchronization data for synchronizing the systems and statistical data relating to a precision of the synchronization based on the signals and the other signals.
